# EUROPEAN PATENT APPLICATION

(11) **EP 4 636 845 A1**
(43) Date of publication of application: **22.10.2025**
(21) Application number: 24860425.8
(22) Date of filing: 29.08.2024
(51) Int. Cl.: H01M 4/134, H01M 4/62, H01M 4/48, H01M 10/052, H01M 4/131, H01M 4/38, H01M 4/02

(54) **NEGATIVE ELECTRODE COMPOSITION, NEGATIVE ELECTRODE FOR LITHIUM SECONDARY BATTERY COMPRISING NEGATIVE ELECTRODE COMPOSITION, AND LITHIUM SECONDARY BATTERY COMPRISING SAME**

(30) Priority: 30.08.2023 KR 20230114515; 28.08.2024 KR 20240116069
(71) Applicant: LG Energy Solution, Ltd., Seoul 07335 (KR)
(72) Inventor: PARK, Junhyoung, Daejeon 34122 (KR); PARK, Su Jin, Daejeon 34122 (KR); LEE, Jaewook, Daejeon 34122 (KR); KWON, Yohan, Daejeon 34122 (KR)
(74) Representative: Hoffmann Eitle
(86) International application number: PCT/KR2024/012939
(87) International publication number: WO 2025/048506

(57) **Abstract**

The present invention relates to a negative electrode composition, a negative electrode for a lithium secondary battery comprising the negative electrode composition, and a lithium secondary battery comprising same, whereby, by using a negative electrode active material including silicon oxide in which Si nanocrystals having an average particle diameter (D50) of 0.1 nm or more and 5 nm or less are included, in an appropriate composition combination with a negative electrode conductive material and a negative electrode aqueous binder, the energy density of a lithium secondary battery is enhanced, and by lowering the degree of degradation when driving the lithium secondary battery, the life characteristics can be further improved.

## Description

### [Technical Field]

The present invention relates to a negative electrode composition, a negative electrode for a lithium secondary battery, including the negative electrode composition, and a lithium secondary battery including the same.

The present invention claims priority to and the benefit of Korean Patent Application Nos. 10-2023-0114515 and 10-2024-0116069 filed in the Korean Intellectual Property Office on August 30, 2023 and August 28, 2024, respectively, the entire contents of which are incorporated herein by reference.

### [Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, studies have been actively conducted on a method for preparing a high-density electrode having a higher energy density per unit volume as an electrode for the high capacity lithium secondary battery as described above, and there is a tendency toward increasingly higher loading to improve energy density. However, as electrode resistance and cell resistance are also increased accordingly, it is difficult to secure performance such as high output and rapid charging. To solve this problem, attempts have been conducted to induce the decrease in resistance by manufacturing patterned electrodes to physically expand the reaction surface, and the patterned electrodes have made it possible to improve performance by inducing reactions not only on the electrode surface but also in the depth direction.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

Although graphite is usually used as a negative electrode active material for a lithium secondary battery, it is difficult to increase the capacity of the lithium secondary battery because graphite has a small capacity per unit mass of 372 mAh/g. Accordingly, in order to increase the capacity of a lithium secondary battery, negative electrode materials such as silicon, tin and oxides thereof have been developed as non-carbon-based negative electrode materials having higher energy density than graphite. However, although these non-carbon-based negative electrode materials have a large capacity, these materials have a problem in that the amount of lithium consumed is large and the irreversible capacity loss is large during the initial charging and discharging due to the low initial efficiency.

In addition, a lithium secondary battery has a size required by its use, and needs to be designed within a limited space. Although consumer demand for increase in energy density and improvement in high output performance is increasing, there is no choice but to increase the content of negative electrode materials to match the demand when a high-capacity positive electrode material is used, so that there is a limit to increasing the battery efficiency within a limited space. Accordingly, there is a need for developing a battery with improved performance such as efficiency and service life within a limited space.

### [Related Art Document]

### [Patent Document]

(Patent Document 1) Korean Patent Application Publication No. 10-2023-0050258

### [Detailed Description of the Invention]

### [Technical Problem]

The present invention relates to a negative electrode composition capable of maximally improving the energy density and service life of a lithium secondary battery, a negative electrode for a lithium secondary battery including the same, and a lithium secondary battery including the same.

### [Technical Solution]

An exemplary embodiment of the present invention provides a negative electrode composition including: a negative electrode active material including a silicon oxide; a negative electrode conductive material; and a negative electrode aqueous binder,
in which based on 100 parts by weight of a solid content of the negative electrode composition, the negative electrode active material is included in an amount of 70 parts by weight or more, the negative electrode conductive material is included in an amount of 0.3 parts by weight or more, and the negative electrode aqueous binder is included in an amount of 9 parts by weight or more,
the negative electrode conductive material includes a linear conductive material in an amount of 0.3 parts by weight or more and 3 parts by weight or less based on 100 parts by weight of the solid content of the negative electrode composition,
the silicon oxide includes Si nanograins, and
the Si nanograins have an average particle diameter (D50) of 0.1 nm or more and 5 nm or less.

An exemplary embodiment of the present invention provides a negative electrode for a lithium secondary battery, including a negative electrode active material layer including the above-described negative electrode composition or a cured product thereof on at least one surface of a negative electrode current collector layer.

An exemplary embodiment of the present invention provides a lithium secondary battery including: a positive electrode;
the above-described negative electrode for a lithium secondary battery;
a separator provided between the positive electrode and the negative electrode; and
an electrolyte.

Another exemplary embodiment of the present invention provides a battery module or battery pack including the above-described lithium secondary battery.

Finally, still another exemplary embodiment of the present invention provides a battery pack including the above-described battery module.

### [Advantageous Effects]

The negative electrode composition according to one embodiment of the present invention can maximally improve the energy density and cycle performance of a lithium secondary battery using a silicon oxide having a high specific capacity in combination with a linear conductive material and a negative electrode aqueous binder in an appropriate composition, and can also further improve the service life characteristics by using a silicon oxide including Si nanograins having a small average particle diameter (D50) to reduce the degree of degradation during operation of the lithium secondary battery.

### [Brief Description of Drawings]

FIG. 1 is a view illustrating the stacking structure of a negative electrode for a lithium secondary battery according to an exemplary embodiment of the present invention.
FIG. 2 is a view illustrating the stacking structure of a lithium secondary battery according to an exemplary embodiment of the present invention.

### [Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, a description of one member being placed "on" another member includes not only a case of the one member adjoining another member but a case of still another member being present between the two members.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mini II manufactured by BEL Japan, Inc. That is, in the present specification, the BET specific surface area may mean a specific surface area measured by the measurement method.

In the present specification, "Dn" means the particle size distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the average particle diameter may be measured using a laser diffraction method. The laser diffraction method can generally measure a particle diameter of from submicron region to about several mm, and results with high reproducibility and high resolution may be obtained.

The measurement of the average particle diameter may be confirmed using water and Triton-X100 dispersant using a Microtrac apparatus (manufacturer: Microtrac, model name: S3500). Specifically, the average particle diameter of the positive electrode active material may be measured in a range of a refractive index of 1.5 to 1.7, and the average particle diameter of the negative electrode active material may be measured under the condition of a refractive index of 1.97 or 2.42. For example, after particles are dispersed in a dispersion medium, the resulting dispersion is introduced into a commercially available laser diffraction particle size measuring device to irradiate the dispersion with an ultrasonic wave of about 28 kHz with an output of 60 W, then a volume cumulative particle size distribution graph is obtained, and then the average particle diameter may be measured by obtaining the particle size corresponding to 50% of the volume cumulative amount.

And, in an exemplary embodiment of the present specification, the average particle size (D50) of the Si nanograins may be confirmed through X-ray diffraction analysis, and the X-ray diffraction analysis may be performed using an X-ray diffraction (XRD) analyzer (trade name: D4-endavor, manufacturer: Bruker). Specifically, the XRD measurement may be performed by sampling a powder-type sample in a holder and using Cu K alpha X-rays. The size of the Si nanograins may be calculated by fitting the XRD results using the Scherrer equation, and in this case, the size of the Si nanograins may be measured based on Si(220). (2θ = 47.5°to 48.5°)

In the present specification, the particle size or particle diameter may mean the average diameter or representative diameter of each grain forming a metal powder.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

Terms or words used in the specification should not be interpreted as being limited to typical or dictionary meaning and should be interpreted with a meaning and a concept which conform to the technical spirit of the present invention based on the principle that an inventor can appropriately define a concept of a term in order to describe his/her own invention in the best way.

Singular expressions of the terms used in the present specification include plural expressions unless they have definitely opposite meanings in the context.

Hereinafter, preferred exemplary embodiments of the present invention will be described in detail. However, the exemplary embodiments of the present invention may be modified into various other forms, and the scope of the present invention is not limited to the exemplary embodiments which will be described below.

### <Negative electrode composition>

The negative electrode composition according to an exemplary embodiment of the present specification is a negative electrode composition including: a negative electrode active material; a negative electrode conductive material; and a negative electrode aqueous binder, in which based on 100 parts by weight of a solid content of the negative electrode composition, the negative electrode active material is included in an amount of 70 parts by weight or more, the negative electrode conductive material is included in an amount of 0.3 parts by weight or more, and the negative electrode aqueous binder is included in an amount of 9 parts by weight or more, the negative electrode conductive material includes a linear conductive material in an amount of 0.3 parts by weight or more and 3 parts by weight or less based on 100 parts by weight of a solid content of the negative electrode composition, the silicon oxide includes Si nanograins, and the Si nanograins have an average particle diameter (D50) of 0.1 nm or more and 5 nm or less.

Since silicon oxide inherently has a high capacity, it may be difficult to balance the capacity with the positive electrode active material when used in an excessive amount. In addition, due to the material properties of silicon oxide, the larger the average particle diameter (D50) of the Si nanograins, the more lithium (Li) remains in the material, which may cause problems such as severe degradation of cycle performance and degree of swelling.

Therefore, the present invention is characterized in that the contents of a negative electrode conductive material and a negative electrode binder to suppress volume expansion during charging and discharging may be appropriately combined to secure cycle performance as well while securing energy density by including an excessive amount of silicon oxide as a negative electrode active material. In particular, by maintaining the average particle diameter (D50) of the Si nanograins dispersed in the silicon oxide of the present invention to be small at 0.1 nm or more and 5 nm or less, it is possible to reduce stress caused by volume expansion of the negative electrode active material particles during charging and discharging, so that it is characterized in that cycle characteristics may be further improved and swelling may be suppressed because it is possible to prevent particles from cracking.

According to an embodiment of the present specification, the negative electrode composition may include the negative electrode active material including silicon oxide in an amount of 70 parts by weight or more based on 100 parts by weight of a solid content of the negative electrode composition.

In the present specification, the "solid content" means the content except for a solvent such as water included in the negative electrode composition.

In an exemplary embodiment of the present specification, the negative electrode active material including silicon oxide may be included in an amount of 70 parts by weight to 99 parts by weight, specifically 70 parts by weight to 90 parts by weight, and more specifically 80 parts by weight to 89.6 parts by weight, based on total 100 parts by weight of the solid content of the negative electrode composition.

In an exemplary embodiment of the present specification, the negative electrode active material may include the silicon oxide, and specifically may consist of the silicon oxide.

That is, in an exemplary embodiment of the present specification, the silicon oxide may be included in an amount of 70 parts by weight to 99 parts by weight, specifically 70 parts by weight to 90 parts by weight, and more specifically 80 parts by weight to 89.6 parts by weight, based on total 100 parts by weight of the solid content of the negative electrode composition.

In the present specification, the "silicon oxide" includes amorphous SiOx (0<x<2) and may include nano-sized Si crystals randomly dispersed therein, and the randomly dispersed nano-sized Si crystals may be expressed as "Si nanograins" according to the present invention.

In the case where an excessive amount of silicon oxide is inherently included as a negative electrode active material, there is a problem in that the cycle characteristics of the battery are adverse due to volume expansion during charging and discharging and a relative decrease in the contents of the negative electrode conductive material and the negative electrode binder. However, the negative electrode composition according to the present specification may maximally improve the energy density and service life performance of a battery by deriving an optimal content in an appropriate combination with a negative electrode conductive material and a negative electrode aqueous binder to be described below while improving the energy density of the electrode by including an excess amount of silicon oxide.

According to an exemplary embodiment of the present specification, the silicon oxide may include SiOx (0<x<2). In this case, the SiOx (0<x<2) corresponds to an amorphous matrix in the silicon oxide particles. The SiOx (0<x<2) may be in a form including some of Si and SiO₂, and the Si may also form a phase. That is, the x corresponds to the ratio of the number of O to Si included in the SiOx (0<x<2). When the silicon oxide particles include the SiOx (0<x<2), the discharge capacity of a secondary battery may be improved.

In an exemplary embodiment of the present specification, the silicon oxide may include Si nanograins, and the Si nanograins may have an average particle diameter (D50) of 0.1 nm or more and 5 nm or less. In an exemplary embodiment of the present specification, the Si nanograins of the silicon oxide may have an average particle diameter (D50) of 5 nm or less, and specifically 3 nm or less.

Furthermore, in an exemplary embodiment of the present specification, the Si nanograins included in the silicon oxide may have an average particle diameter (D50) of 0.1 nm or more, specifically 0.5 nm or more, and more specifically more than 1 nm.

When the average particle diameter (D50) of the Si nanograins satisfies the above range, Li ions are uniformly diffused inside the Si particles, so that there is an effect of stably maintaining the structure of the negative electrode active material particles during charging and discharging. In contrast, when the average particle diameter (D50) of the Si nanograins exceeds the above range, stress occurs due to the contraction/expansion of the Si nanograins appearing during charging/discharging, which may cause cracks to form in the negative electrode active material particles, reaction non-uniformity may occur because Li ions fail to diffuse into the Si nanograins, and a problem in that the service life deteriorates as the degradation of the battery is accelerated due to the reaction non-uniformity may occur.

Inherently, the silicon oxide negative electrode active material involves very complex crystal changes in a reaction of electrochemically absorbing, storing and releasing lithium atoms. As the reaction of electrochemically absorbing, storing and releasing lithium atoms progresses, the composition and crystal structure of Si particles are changed to Si (crystal structure: Fd3m), LiSi (crystal structure: I41/a), Li₂Si (crystal structure: C2/m), Li₇Si₂ (Pbam), Li₂₂Si₅ (F23), and the like, and due to complex changes in the crystal structure, the volume of the Si particles expands by about four times. Accordingly, when the charging and discharging cycle is repeated, Si particles are destroyed, and as the bond between lithium atom and Si particle is formed, the insertion site of the lithium atom, which the Si particle initially had, is damaged, and as a result, the cycle life may remarkably deteriorate. That is, when the average particle diameter (D50) of the Si nanograins according to an exemplary embodiment of the present specification exceeds 5 nm, in the process in which the volume of Si particles expand as they react with lithium upon the charging of a lithium secondary battery, stress is caused to the surrounding materials in the negative electrode, resulting in problems of a deterioration in battery performance, such as a shortened service life of the battery, and therefore, it is preferred that the Si nanograins satisfy the above maximum average particle diameter (D50) range.

Further, the Si nanograins according to an exemplary embodiment of the present specification may have a minimum average particle diameter (D50) of 0.1 nm. When the Si nanograins have an average particle diameter less than 0.1 nm, a problem in that the energy density of the negative electrode is reduced may occur.

Although the negative electrode composition according to an exemplary embodiment of the present specification may sufficiently increase the energy density and capacity using a negative electrode active material including silicon oxide, silicon oxide has a limitation that the volume of the silicon oxide expands rapidly during charging/discharging, damaging the conductive path formed in the negative electrode active material layer and thus degrading the performance of the battery, so that the type of negative electrode conductive material used together with the negative electrode active material is important.

The negative electrode composition according to an exemplary embodiment of the present specification may include the negative electrode conductive material in an amount of 0.3 parts by weight or more based on 100 parts by weight of the solid content of the negative electrode composition.

Specifically, in an exemplary embodiment of the present specification, the negative electrode conductive material may be included in an amount of 0.3 parts by weight or more and 11 parts by weight or less, more specifically, 0.4 parts by weight or more and 10 parts by weight or less, based on total 100 parts by weight of the solid content of the negative electrode composition.

When the negative electrode conductive material according to an exemplary embodiment of the present specification is included in an amount less than the lower limit value of the above content range, it may be difficult to control a distortion phenomenon of an electrode caused by a volume expansion of silicon oxide or to suppress a disconnection of a conductive path caused by the volume expansion, and when the negative electrode conductive material is included in an amount more than the upper limit value of the above content range, the contents of the negative electrode active material and the negative electrode binder are relatively reduced, so that a decrease in energy density or capacity degradation may occur. Therefore, it is preferred that the negative electrode conductive material according to an exemplary embodiment of the present invention satisfies the above content range.

In this case, the content of the negative electrode conductive material may be parts by weight of the negative electrode conductive material including only the linear conductive material and another solvent, or may be the content of the negative electrode conductive material including all of the linear conductive material and an additional planar or particulate conductive material.

In an exemplary embodiment of the present specification, the negative electrode conductive material may include a linear conductive material in an amount of 0.3 parts by weight to 3 parts by weight based on 100 parts by weight of the solid content of the negative electrode composition.

In the present specification, the "linear conductive material" refers to a conductive material having a one-dimensional (1D) structure with a diameter on the nanometer unit level and a high aspect ratio, or a conductive material having a fibrous structure such as a cylindrical type or a tube type. Examples of the linear conductive material include carbon nanotubes, and the like, and the carbon nanotubes may be bundle type carbon nanotubes. The bundle type carbon nanotubes may include a plurality of carbon nanotube units. Specifically, the term 'bundle type' used herein refers to, unless otherwise specified, a secondary shape in the form of a bundle or rope in which a plurality of carbon nanotube units are aligned side by side in such an orientation that longitudinal axes of the carbon nanotube units are substantially the same, or are entangled. In the carbon nanotube unit, a graphite sheet has a cylindrical shape with a nano-sized diameter and has an sp² bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

In addition, by necessarily including a linear conductive material as the negative electrode conductive material according to an exemplary embodiment of the present specification, the distortion phenomenon of the electrode caused by the volume expansion of silicon oxide included in the negative electrode active material may be controlled, thereby maintaining the initial cycle characteristics of the battery. However, since it is difficult to maintain cycle characteristics during repeated battery charging and discharging using the linear conductive material according to an exemplary embodiment of the present invention alone, the present invention seeks to solve the above problem by combining the linear conductive material with a negative electrode aqueous binder in an optimal content ratio, as described below.

In an exemplary embodiment of the present specification, the negative electrode conductive material may include a linear conductive material in an amount of 0.3 parts by weight or more and 3 parts by weight or less, specifically 0.4 parts by weight or more and 3 parts by weight or less, and more specifically 0.4 parts by weight or more and 1 part by weight or less, based on total 100 parts by weight of a solid content of the negative electrode composition.

When the linear conductive material according to an exemplary embodiment of the present specification is included in an amount less than the lower limit value of the above content range, a rapid capacity degradation may occur in the initial cycle of the battery, and when the linear conductive material is included in an amount more than the upper limit value of the above content range, the performance is not as good as when an excessive amount of the linear conductive material is included, and rather, there is a disadvantage in that only the manufacturing cost is increased by using an expensive linear conductive material.

Therefore, it is preferred that the content of the linear conductive material according to an exemplary embodiment of the present invention satisfies the above range. However, when the content of the negative electrode aqueous binder is reduced and an excessive amount of the negative electrode conductive material is included, the initial cycle characteristics may be maintained, but a rapid capacity degradation of the battery may occur after 200 cycles, so that it is preferred to prevent degradation of the battery by including an appropriate content of a negative electrode aqueous binder to be described below.

In an exemplary embodiment of the present specification, the linear conductive material may include single-walled carbon nanotubes (SWCNTs) or multi-walled carbon nanotubes (MWCNTs), and more specifically, may include single-walled carbon nanotubes (SWCNTs).

In an exemplary embodiment of the present specification, the linear conductive material may have a BET specific surface area of 100 m²/g or more and 100,000 m²/g or less, specifically 500 m²/g or more and 10,000 m²/g or less, and more specifically 1,000 m²/g or more and 5,000 m²/g or less.

Furthermore, in an exemplary embodiment of the present specification, the linear conductive material may have an aspect ratio of 500 or more, specifically 1,000 or more, and more specifically 10,000 or more, and may have an aspect ratio of 1,000,000 or less, specifically 100,000 or less.

The negative electrode composition according to an exemplary embodiment of the present specification may include the negative electrode aqueous binder in an amount of 9 parts by weight or more based on 100 parts by weight of the solid content of the negative electrode composition.

In an exemplary embodiment of the present specification, the negative electrode aqueous binder may be included in an amount of 9 parts by weight or more, specifically 9.4 parts by weight or more, and more specifically 10 parts by weight or more, based on total 100 parts by weight of the solid content of the negative electrode composition.

Further, in an exemplary embodiment of the present specification, the negative electrode aqueous binder may be included in an amount of 20 parts by weight or less, specifically 18 parts by weight or less, and more specifically 15 parts by weight or less, based on total 100 parts by weight of the solid content of the negative electrode composition.

In an exemplary embodiment of the present specification, the negative electrode aqueous binder may be included in an amount of 9 parts by weight or more and 20 parts by weight or less, specifically 9.4 parts by weight or more and 18 parts by weight or less, and more specifically 10 parts by weight or more and 15 parts by weight or less, based on total 100 parts by weight of the solid content of the negative electrode composition.

When the negative electrode aqueous binder according to an embodiment of the present specification satisfies the above content range, there is an effect of improving the service life performance of the battery because it is possible to capture silicon oxide that involves large volume expansion during charging and discharging. In particular, when the negative electrode aqueous binder according to the present invention is included in an amount less than the lower limit value of the above range, even though the negative electrode conductive material according to the present invention, particularly the linear conductive material, is added in an amount at least twice the usual amount, the negative electrode conductive material may temporarily suppress the distortion of the electrode caused by the volume change of the silicon oxide active material only in the initial stage of the cycle, and the performance of the battery is not recovered because it is difficult to perform the corresponding role throughout the entire cycle as in the negative electrode aqueous binder according to the present invention. In addition, when the negative electrode aqueous binder is included in an amount more than the upper limit value of the above range, the contents of the negative electrode active material and the negative electrode conductive material are relatively reduced, so that a decrease in energy density or capacity degradation may occur.

Therefore, when the negative electrode conductive material and the negative electrode aqueous binder according to an exemplary embodiment of the present invention satisfy the above-described content ranges, it is possible to maximally improve the service life performance while improving the energy density of the electrode even though the negative electrode active material including the silicon oxide according to the present invention is included in an excessive amount.

The negative electrode aqueous binder according to an exemplary embodiment of the present specification serves to capture the negative electrode active material and the negative electrode conductive material in order to prevent the distortion and structural deformation of the negative electrode structure in the volume expansion and relaxation of the silicon oxide active material, and specifically may be a polyacrylamide (PAM)-based binder even though it is possible to apply all of the general negative electrode aqueous binders that satisfy the above roles.

Silicon oxide, which is used as the negative electrode active material, has such a large volume expansion compared to carbon-based active materials (particularly graphite) that the negative electrode conductive network may deteriorate during charging and discharging, and in the case of the existing SBR/CMC binder as a binder, the mechanical stiffness is low, which may lead to serious problems such as swelling and cell performance deterioration during charging and discharging.

In contrast, when a PAM-based binder is applied to silicon oxide as in the present invention mechanical stiffness is excellent compared to existing binders, so that conductive connectivity is excellent and swelling properties may be suppressed during charging and discharging.

In an exemplary embodiment of the present specification, the PAM-based binder means that the main component consists of a poly(meth)acrylamide-based monomer, and may further include poly(meth)acrylic acid (PAA)-based, polyvinyl alcohol (PVA)-based, poly(meth)acrylonitrile (PAN)-based monomers, and the like as other components.

In the present specification, a polymerization initiator is used to prepare the PAM-based binder, and ammonium persulfate may be used as an example of the polymerization initiator, but the polymerization initiator is not limited thereto.

In the present specification, the fact that the binder includes a plurality of compounds having a specific ratio (represented by parts by weight or weight ratio) may mean that each compound (for example: acrylamide, acrylic acid, and acrylonitrile) is included as a monomer for the binder polymer.

In the present specification, the binder includes a plurality of compounds as monomers, and the monomer containing the largest content is regarded as a representative, and thus, may be named a "monomer"-based compound.

In the present specification, the "(meth)acrylic..." may mean methacrylic and/or acrylic.

In an exemplary embodiment of the present specification, when the PAM-based binder includes a subcomponent as an additional monomer to form a copolymer, the proportion of each monomer is not particularly limited as long as the binder belongs to a desired aqueous binder.

In an exemplary embodiment of the present specification, the negative electrode composition may include the negative electrode active material, the negative electrode conductive material, and the negative electrode aqueous binder in an amount of 70 parts by weight or more and 99 parts by weight or less, 0.3 parts by weight or more and 11 parts by weight or less, and 9 parts by weight or more and 20 parts by weight or less, respectively, based on 100 parts by weight of a solid content of the negative electrode composition.

Specifically, the negative electrode composition may include the negative electrode active material, the negative electrode conductive material, and the negative electrode aqueous binder in an amount of 70 parts by weight or more and 90 parts by weight or less, 0.3 parts by weight or more and 11 parts by weight or less, and 9 parts by weight or more and 20 parts by weight or less, respectively, based on 100 parts by weight of a solid content of the negative electrode composition.

More specifically, the negative electrode composition may include the negative electrode active material, the negative electrode conductive material, and the negative electrode aqueous binder in an amount of 80 parts by weight or more and 89.6 parts by weight or less, 0.4 parts by weight or more and 10 parts by weight or less, and 9.4 parts by weight or more and 18 parts by weight or less, respectively, based on 100 parts by weight of a solid content of the negative electrode composition.

In an exemplary embodiment of the present specification, the negative electrode composition may include the silicon oxide, the negative electrode conductive material, and the negative electrode aqueous binder in an amount of 70 parts by weight or more and 99 parts by weight or less, 0.3 parts by weight or more and 11 parts by weight or less, and 9 parts by weight or more and 20 parts by weight or less, respectively, based on 100 parts by weight of a solid content of the negative electrode composition.

Specifically, the negative electrode composition may include the silicon oxide, the negative electrode conductive material, and the negative electrode aqueous binder in an amount of 70 parts by weight or more and 90 parts by weight or less, 0.3 parts by weight or more and 11 parts by weight or less, and 9 parts by weight or more and 20 parts by weight or less, respectively, based on 100 parts by weight of a solid content of the negative electrode composition.

More specifically, the negative electrode composition may include the silicon oxide, the negative electrode conductive material, and the negative electrode aqueous binder in an amount of 80 parts by weight or more and 89.6 parts by weight or less, 0.4 parts by weight or more and 10 parts by weight or less, and 9.4 parts by weight or more and 18 parts by weight or less, respectively, based on 100 parts by weight of a solid content of the negative electrode composition.

When the composition of the negative electrode composition according to an exemplary embodiment of the present specification satisfies the above combination range, the energy density and cycle performance of the lithium secondary battery may be maximally improved.

In addition to those described above, the content to be described below may be applied to the negative electrode composition according to an exemplary embodiment of the present specification.

In the negative electrode composition according to an exemplary embodiment of the present specification, the Si nanograins included in the silicon oxide may be formed by performing a heat treatment under the conditions of 500°C or more and 1500°C or less during the preparation of the negative electrode active material, and may be formed by performing the heat treatment under the conditions of specifically 600°C or more and 1300°C or less, and more specifically 700°C or more and 1200°C or less. When the negative electrode active material is prepared under a temperature condition out of the above range, the above-described problems may occur as the Si nanograins dispersed in the silicon oxide may grow to exceed the average particle diameter (D50) range of the Si nanograins according to the present specification, and when the temperature is too low, it may be difficult to prepare a desired negative electrode active material.

In an exemplary embodiment of the present specification, a carbon layer may be provided on at least a part of the surface of the silicon oxide. In this case, the carbon layer may be in the form of covering at least a part of the surface, that is, partially covering the surface of the silicon oxide, or covering the entire surface of the silicon oxide. When a carbon layer is provided on at least a part of the surface of the silicon oxide, electrical conductivity is imparted to the negative electrode active material, and the initial efficiency, service life characteristics, and battery capacity characteristics of the secondary battery may be improved.

In an exemplary embodiment of the present specification, the carbon layer may include amorphous carbon, and the carbon layer may further include crystalline carbon.

In an exemplary embodiment of the present specification, the crystalline carbon may include at least one selected from the group consisting of fullerene, carbon nanotubes, and graphene, and the crystalline carbon may further improve the conductivity of the negative electrode active material.

In an exemplary embodiment of the present specification, the amorphous carbon may be a carbide of at least one substance selected from the group consisting of tar, pitch, and other organic materials, or may be a carbon-based material formed using hydrocarbon as a source for a chemical vapor deposition process, and the amorphous carbon may suppress the expansion of the silicon oxide by appropriately maintaining the strength of the carbon layer.

In the present specification, the carbide of the other organic materials may be a carbide of sucrose, glucose, galactose, fructose, lactose, mannose, ribose, aldohexose or ketohexose and a carbide of an organic material selected from combinations thereof.

In the present specification, the hydrocarbon may be a substituted or unsubstituted aliphatic or alicyclic hydrocarbon, or a substituted or unsubstituted aromatic hydrocarbon. The aliphatic or alicyclic hydrocarbon of the substituted or unsubstituted aliphatic or alicyclic hydrocarbon may be methane, ethane, ethylene, acetylene, propane, butane, butene, pentane, isobutane, hexane, or the like. Examples of the aromatic hydrocarbon of the substituted or unsubstituted aromatic hydrocarbon include benzene, toluene, xylene, styrene, ethylbenzene, diphenylmethane, naphthalene, phenol, cresol, nitrobenzene, chlorobenzene, indene, coumarone, pyridine, anthracene, phenanthrene, or the like.

In an exemplary embodiment of the present specification, the carbon layer may be an amorphous carbon layer.

In an exemplary embodiment of the present specification, the carbon layer may be included in an amount of 0.1 parts by weight to 50 parts by weight, 0.1 parts by weight to 30 parts by weight or 0.1 parts by weight to 20 parts by weight, based on total 100 parts by weight of the silicon oxide. More specifically, the carbon layer may be included in an amount of 0.5 parts by weight to 15 parts by weight, 1 part by weight to 10 parts by weight or 1 part by weight to 5 parts by weight. When the content of the carbon layer satisfy the above range, it is possible to prevent a decrease in the capacity and efficiency of the negative electrode active material.

In an exemplary embodiment of the present specification, the carbon layer may have a thickness of 1 nm to 500 nm, specifically 5 nm to 300 nm. When the thickness of the carbon layer satisfies the above range, the conductivity of the negative electrode active material is improved, the volume change of the negative electrode active material is readily suppressed, and side reactions between an electrolyte solution and the negative electrode active material are suppressed, so that there is an effect that the initial efficiency and/or service life of a battery is/are improved.

In an exemplary embodiment of the present specification, the carbon layer may be formed by a chemical vapor deposition (CVD) method using at least one hydrocarbon gas selected from the group consisting of methane, ethane and acetylene.

In an exemplary embodiment of the present specification, the silicon oxide may further include metal impurities. The metal impurities are impurities that may be included in silicon, and the content thereof may satisfy the range of 0.1 parts by weight or less based on 100 parts by weight of the entire silicon-based active material.

Meanwhile, in an exemplary embodiment of the present specification, the negative electrode active material including silicon oxide may have an average particle diameter (D50) of 1 µm to 15 µm, specifically 2 µm to 12.5 µm, and more specifically 5 µm to 10 µm. In this case, the average particle diameter (D50) of the negative electrode active material is based on the average particle diameter (D50) of the final particles including both SiOx (0<x<2) and Si nanograins.

When the average particle diameter (D50) of the negative electrode active material satisfies the above range, the viscosity of the negative electrode composition may be formed within an appropriate range as the specific surface area of the particles falls within a suitable range, thereby facilitating dispersion of the particles constituting the negative electrode composition. In addition, as a complex consisting of the negative electrode conductive material and the negative electrode binder in the negative electrode composition provides an excellent contact area between the silicon oxide and the negative electrode conductive material, the conductive network may be more likely to be maintained, thereby increasing the capacity retention rate, and excessively large silicon oxide may be eliminated to form a smooth surface of the negative electrode, thereby preventing a non-uniform current density phenomenon during charging and discharging.

In the negative electrode composition according to an exemplary embodiment of the present specification, the negative electrode conductive material may further include one or more selected from the group consisting of a planar conductive material; and a particulate conductive material.

In an exemplary embodiment of the present specification, the negative electrode conductive material may further include a planar conductive material.

In the present specification, the "planar conductive material" refers to a conductive material with a two-dimensional (2D) structure in which atoms form a crystalline structure on a plane while having a thickness of a single atomic layer or a plurality, such as two or more, of atomic layers. The planar conductive material means a material for securing a conductive path in a planar form in the negative electrode active material layer and simultaneously serves to suppress the disconnection of the conductive path due to volume expansion, and may be expressed as a plate-like conductive material or a bulk-type conductive material. Specifically, the planar conductive material may include at least one selected from the group consisting of plate-like graphite, graphene, graphene oxide, and graphite flake, and may be preferably plate-like graphite.

In an exemplary embodiment of the present specification, the planar conductive material may have an average particle diameter (D50) of 2 µm to 7 µm, specifically 3 µm to 6 µm, and more specifically 4 µm to 5 µm. When the average particle diameter (D50) of the planar conductive material satisfies the above range, a sufficient particle size facilitates dispersion without causing an excessive increase in viscosity of the negative electrode slurry. Therefore, the dispersion effect is excellent when particles are dispersed using the same equipment and time.

In an exemplary embodiment of the present specification, the planar conductive material may have a D10 of 0.5 µm or more and 1.5 µm or less, a D50 of 2.5 µm or more and 3.5 µm or less, and a D90 of 7.0 µm or more and 15.0 µm or less.

In an exemplary embodiment of the present specification, as the planar conductive material, it is possible to use a high specific surface area planar conductive material having a high BET specific surface area; or a low specific surface area planar conductive material.

In an exemplary embodiment of the present specification, as the planar conductive material, a high specific surface area planar conductive material; or a low specific surface area planar conductive material may be used without limitation, but in particular, the planar conductive material according to the present specification may be affected by the dispersion effect to some extent in the electrode performance, so that it may be particularly desirable to use a low specific surface area planar conductive material that does not cause a problem in dispersion.

In another exemplary embodiment of the present specification, the planar conductive material may have a BET specific surface area of 5 m²/g or more and 500 m²/g or less, preferably 5 m²/g or more and 300 m²/g or less, and more preferably 5 m²/g or more and 250 m²/g or less.

In still another exemplary embodiment, the planar conductive material is a high specific surface area planar conductive material, and the BET specific surface area may satisfy a range of 50 m²/g or more and 500 m²/g or less, preferably 80 m²/g or more and 300 m²/g or less, and more preferably 100 m²/g or more and 300 m²/g or less.

In yet another exemplary embodiment, the planar conductive material is a low specific surface area planar conductive material, and the BET specific surface area may satisfy a range of 5 m²/g or more and 40 m²/g or less, preferably 5 m²/g or more and 30 m²/g or less, and more preferably 5 m²/g or more and 25 m²/g or less.

The negative electrode conductive material according to an exemplary embodiment of the present specification has a completely different configuration from a conductive material applied to the positive electrode. That is, the negative electrode conductive material according to the present invention serves to capture a contact point between negative electrode active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to an exemplary embodiment of the present specification is applied to a silicon-based negative electrode active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based negative electrode active material as in the present invention.

In an exemplary embodiment of the present specification, the negative electrode conductive material may further include a particulate conductive material.

The negative electrode conductive material according to an exemplary embodiment of the present specification may include any particulate conductive material without limitation as long as it is generally used, but if the negative electrode conductive material does not include a linear conductive material and only includes a particulate conductive material, the particulate conductive material has a lower conductivity and a lower specific surface area than the linear conductive material or the planar conductive material, so that when the particulate conductive material is used in the present invention, significant capacity degradation may occur because a conductive path (pass) cannot be formed in the negative electrode active material layer. If the negative electrode conductive material according to an exemplary embodiment of the present specification uses a particulate conductive material together with the linear conductive material, problems such as changes in the physical properties of the negative electrode slurry and gas generation at high temperatures may occur.

In the negative electrode composition according to an exemplary embodiment of the present specification, the negative electrode binder may further include those known in the art to improve the bonding between negative electrode active material particles and adhesion between the negative electrode active material particles and the negative electrode current collector, non-limiting examples thereof may further include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may further include various copolymers thereof.

### <Negative electrode>

The negative electrode for a lithium secondary battery according to an exemplary embodiment of the present specification may include a negative electrode active material layer including the above-described negative electrode composition or a cured product thereof on at least one surface of a negative electrode current collector layer.

Specifically, the negative electrode for a lithium secondary battery may include a negative electrode current collector and a negative electrode active material layer disposed on one or both sides of the negative electrode current collector, and the negative electrode active material layer may include the above-described negative electrode composition or a cured product thereof.

In this case, in the present specification, including the "cured product" may mean the case where the negative electrode composition is cured by heat treatment or light treatment by a method known in the art.

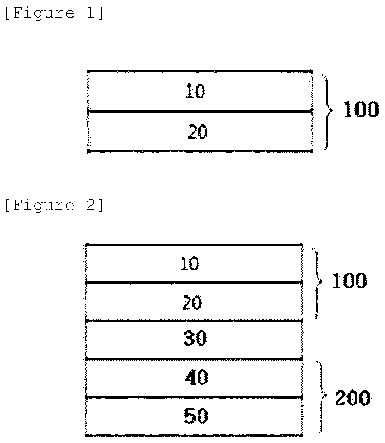

FIG. 1 is a view illustrating the stacking structure of a negative electrode for a lithium secondary battery according to an exemplary embodiment of the present specification. Specifically, it is possible to confirm a negative electrode 100 for a lithium secondary battery, including a negative electrode active material layer 20 on one surface of a negative electrode current collector layer 10, and FIG. 1 illustrates the negative electrode active material layer formed on one surface of the negative electrode current collector layer, but the negative electrode active material layer may be included on both surfaces of the negative electrode current collector layer.

The negative electrode active material layer may be formed by applying a negative electrode slurry including the above-described negative electrode composition, a solvent for forming a negative electrode slurry, and/or a thickener to at least one surface of a negative electrode current collector layer and drying and roll-pressing the negative electrode current collector layer.

The negative electrode slurry may include a solvent for forming a negative electrode slurry. Specifically, the solvent for forming a negative electrode slurry may include at least one selected from the group consisting of distilled water, ethanol, methanol, and isopropyl alcohol, specifically distilled water in terms of facilitating the dispersion of the components.

The negative electrode current collector layer is sufficient as long as the negative electrode current collector has conductivity without causing a chemical change to the battery, and is not particularly limited. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the negative electrode current collector layer may have a thickness of 6 µm to 20 µm, the thickness of the current collector layer is not limited thereto.

The thickener may be carboxymethyl cellulose (CMC) and is not limited thereto, and a thickener used in the art may be appropriately employed.

In an exemplary embodiment of the present specification, the thickener may be included in an amount of 0.5 parts by weight to 25 parts by weight, specifically 0.5 parts by weight to 20 parts by weight, and more specifically 1 part by weight to 20 parts by weight based on total 100 parts by weight of the solid content of the negative electrode slurry.

In an exemplary embodiment of the present specification, the content of the solid content of the negative electrode slurry may be 10 parts by weight to 99 parts by weight, specifically 20 parts by weight to 80 parts by weight, based on total 100 parts by weight of the negative electrode slurry.

### <Secondary battery>

The lithium secondary battery according to an exemplary embodiment of the present specification may include a positive electrode; the above-described negative electrode for a lithium secondary battery; a separator provided between the positive electrode and the negative electrode; and an electrolyte.

FIG. 2 is a view illustrating the stacking structure of a lithium secondary battery according to an exemplary embodiment of the present specification. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween.

The lithium secondary battery according to an exemplary embodiment of the present specification may particularly include the above-described negative electrode. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector layer and a positive electrode active material layer formed on the positive electrode current collector layer and including a positive electrode active material.

In the positive electrode, the positive electrode current collector layer is not particularly limited as long as the positive electrode current collector layer has conductivity without causing a chemical change to the battery, and for example, it is possible to use stainless steel, aluminum, nickel, titanium, fired carbon, or aluminum or stainless steel whose surface is treated with carbon, nickel, titanium, silver, and the like. Additionally, the positive electrode current collector layer may typically have a thickness of 3 µm to 500 µm, and the adhesion of the positive electrode active material may also be enhanced by forming fine irregularities on the surface of the positive electrode current collector layer. For example, the positive electrode current collector layer may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least any one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

In addition, the positive electrode binder serves to improve the bonding between positive electrode active material particles and the adhesion between the positive electrode active material and the positive electrode current collector layer. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolyte, and for example, as an anion of the lithium salt, it is possible to use one or more selected from the group consisting of F⁻, Cl⁻, I⁻, NO₃⁻, N (CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present specification provides a battery module including the lithium secondary battery as a unit cell, and a battery pack including the same.

Furthermore, another exemplary embodiment of the present invention provides a battery pack including the lithium secondary battery.

Since the lithium secondary battery according to exemplary embodiments of the present specification stably exhibits excellent discharge capacity, output characteristics, and cycle performance, the lithium secondary battery may be used as a power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

### [Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### <Preparation Examples>

### <Preparation of negative electrode>

### Example 1

A negative electrode composition was prepared by mixing silicon oxide (average particle diameter (D50): 5.5 µm) including Si nanograins with an average particle diameter (D50) of 3 nm as a negative electrode active material, SWCNTs (BET specific surface area: 1,000 m²/g to 1,500 m²/g, aspect ratio: 10,000 or more), and a polyacrylamide binder at a weight ratio of 88.5:0.44:11.06. A negative electrode slurry was prepared by adding the negative electrode composition to distilled water as a solvent for forming a negative electrode slurry (solid concentration of 28 wt%).

The average particle diameter (D50) of the Si nanograins was calculated by fitting the XRD results using the Scherrer equation, and in this case, the reference of nanograins was measured based on Si(220). (2θ=47.4° to 48.5°)

After the conductive material, the binder and water were dispersed at 2500 rpm for 30 minutes using a homo mixer as a mixing method, a negative electrode active material was added thereto, and then the resulting mixture was dispersed at 2500 rpm for 30 minutes to prepare a negative electrode slurry.

Both surfaces of a copper current collector layer (thickness: 15 µm) as a negative electrode current collector laver were coated with the negative electrode slurry in a loading amount of 3.675 mAh/cm², and the copper current collector was roll-pressed and dried in a vacuum oven at 130°C for 10 hours to form a negative electrode (thickness: 57 µm).

### Example 2

A negative electrode was formed in the same manner as in the preparation example in Example 1, except that a negative electrode composition was prepared by mixing silicon oxide (average particle diameter (D50): 5.5 µm) including Si nanograins with an average particle diameter (D50) of 2.5 nm as a negative electrode active material, SWCNTs (BET specific surface area: 1,000 m²/g to 1,500 m²/g, aspect ratio: 10,000 or more), graphite (product name: SFG-6L, BET specific surface area 17 m²/g) as an additional planar conductive material, and a polyacrylamide binder at a weight ratio of 80.0:0.4:9.6:10.0.

### Example 3

A negative electrode was formed in the same manner as in the preparation example in Example 1, except that a negative electrode composition was prepared by mixing silicon oxide (average particle diameter (D50): 5.5 µm) including Si nanograins with an average particle diameter (D50) of 3 nm as a negative electrode active material, SWCNTs (BET specific surface area: 1,000 m²/g to 1,500 m²/g, aspect ratio: 10,000 or more), and a polyacrylamide binder at a weight ratio of 88.5:1.2:10.3.

### Example 4

A negative electrode was formed in the same manner as in the preparation example in Example 2, except that a negative electrode composition was prepared by mixing silicon oxide (average particle diameter (D50): 5.5 µm) including Si nanograins with an average particle diameter (D50) of 2.5 nm as a negative electrode active material, SWCNTs (BET specific surface area: 1,000 m²/g to 1,500m²/g, aspect ratio: 10,000 or more), an additional particulate conductive material (carbon black), and a polyacrylamide binder at a weight ratio of 80.0:0.4:9.6:10.0.

### Comparative Example 1

A negative electrode was formed in the same manner as in the preparation example in Example 1, except that a negative electrode composition was prepared by mixing graphite (average particle diameter (D50): 5.5 µm) as a carbon-based negative electrode active material, SWCNTs, and a polyacrylamide binder at a weight ratio of 95.6:1.0:3.4.

### Comparative Example 2

A negative electrode was formed in the same manner as in the preparation example in Example 1, except that a negative electrode composition was prepared by mixing silicon oxide (average particle diameter (D50): 5.5 µm) including Si nanograins with an average particle diameter (D50) of 2.6 nm as a negative electrode active material, SWCNTs, and a polyacrylamide binder at a weight ratio of 93.8:0.47:5.73.

### Comparative Example 3

A negative electrode was formed in the same manner as in the preparation example in Example 1, except that a negative electrode composition was prepared by mixing silicon oxide (average particle diameter (D50): 5.5 µm) including Si nanograins with an average particle diameter (D50) of 2.8 nm as a negative electrode active material, SWCNTs, and a polyacrylamide binder at a weight ratio of 92.7:0.927:6.373.

### Comparative Example 4

A negative electrode was formed in the same manner as in the preparation example in Example 1, except that silicon oxide including Si nanograins with an average particle diameter (D50) of 0.08 nm was included as a negative electrode active material.

### Comparative Example 5

A negative electrode was formed in the same manner as in the preparation example in Example 1, except that silicon oxide including Si nanograins with an average particle diameter (D50) of 7 nm was included as a negative electrode active material.

### Comparative Example 6

A negative electrode was formed in the same manner as in the preparation example in Example 1, except that a negative electrode composition was prepared by mixing silicon oxide (average particle diameter (D50): 5.5 µm) including Si nanograins with an average particle diameter (D50) of 3 nm as a negative electrode active material, SWCNTs (BET specific surface area: 1,000 m²/g to 1,500m²/g, aspect ratio: 10,000 or more), and a polyacrylamide binder at a weight ratio of 88.5:0.2:11.3.

### Comparative Example 7

A negative electrode was formed in the same manner as in the preparation example in Example 1, except that a negative electrode composition was prepared by mixing silicon oxide (average particle diameter (D50): 5.5 µm) including Si nanograins with an average particle diameter (D50) of 3 nm as a negative electrode active material, a particulate conductive material (carbon black), and a polyacrylamide binder at a weight ratio of 88.5:0.44:11.06.

### Comparative Example 8

A negative electrode was formed in the same manner as in the preparation example in Example 2, except that a negative electrode composition was prepared by mixing silicon oxide (average particle diameter (D50): 5.5 µm) including Si nanograins with an average particle diameter (D50) of 2.5 nm as a negative electrode active material, a particulate conductive material (carbon black), an additional planar conductive material (product name: SFG-6L, BET specific surface area 17 m²/g), and a polyacrylamide binder at a weight ratio of 80.0:0.4:9.6:10.0.

### <Manufacture of lithium secondary battery>

A positive electrode slurry was prepared by adding an NCMA active material (average particle diameter (D50): 9.6 µm) as a positive electrode active material, carbon nanotubes as a positive electrode conductive material, and polyvinylidene fluoride (PVdF) as a positive electrode binder at a weight ratio of 97.6 : 0.8 : 1.6 to N-methyl-2-pyrrolidone (NMP) as a solvent for forming a positive electrode slurry.

Both surfaces of an aluminum current collector (thickness: 12 µm) as a positive electrode current collector were coated with the positive electrode slurry in a loading amount of 3.5 mAh/ cm₂, and the aluminum current collector was roll-pressed and dried in a vacuum oven at 130°C for 10 hours to form a positive electrode active material layer (thickness: 75 µm), thereby preparing a positive electrode (thickness of the positive electrode: 162 µm, porosity of 26%).

A lithium secondary battery full-cell of Example 1 was manufactured by interposing a polyethylene separator between the positive electrode and the negative electrode of Example 1 and injecting an electrolyte solution thereinto.

The electrolyte solution was obtained by adding 0.5 wt% of vinylene carbonate based on the total weight of the electrolyte to an organic solvent in which fluoroethylene carbonate (FEC) and diethyl carbonate (DEC) were mixed at a volume ratio of 10:90 and adding LiPF₆ and LiFSI as lithium salts at a concentration of 0.5 M and 1 M, respectively, thereto.

Lithium secondary battery full-cells were each manufactured in the same manner as described above, except that the negative electrodes of Examples 2 to 4 and Comparative Examples 1 to 8 were used.

### <Experimental Example 1> Evaluation of energy density and service life characteristics

The cell energy density of the lithium secondary batteries including the negative electrodes manufactured in Examples 1 to 4 and Comparative Examples 1 to 8 was measured, and a service life evaluation was performed using an electrochemical charger/discharger to evaluate the capacity retention rate at 300 cycles.

Specifically, during the evaluation of the service life characteristics, the initial charge capacity was measured by setting the C-rate to 1.0 C, charging was performed under CCCV conditions by setting an upper limit voltage and a cut-off current to 4.2 V and 0.05 C, respectively, and the initial discharge capacity was measured under CC conditions by setting a C-rate of and a lower limit voltage to 0.5 C and 2.5 V, respectively. Capacity retention rate (%) = {(Charge/discharge capacity in the Nth cycle)/(Charge/discharge capacity in the 1st cycle)} × 100

The results of evaluating the energy density and service life characteristics are shown in the following Table 1.

**[Table 1]**

| | Energy density E/D (Wh/L) | Capacity retention rate (%) (@300 cycles) |
|---|---|---|
| Example 1 | 865.1 | 80.9 |
| Example 2 | 761.8 | 80.3 |
| Example 3 | 867.8 | 79.8 |
| Example 4 | 755.5 | 80.0 |
| Comparative Example 1 | 629.1 | More than 95 |
| Comparative Example 2 | 774.4 | 72.8 |
| Comparative Example 3 | 772.3 | 77.8 |
| Comparative Example 4 | 680.7 | 82 |
| Comparative Example 5 | 890.1 | Less than 60 |
| Comparative Example 6 | 854.2 | 68.1 |
| Comparative Example 7 | 862.5 | Less than 60 |
| Comparative Example 8 | 759.5 | Less than 60 |

In the related art, the silicon content was simply increased to produce high energy density in the negative electrode, but this resulted in a decrease in cycle capacity retention (less than about 79%), or when the active material and other characteristics were adjusted to secure capacity retention rate (about 79% or more), there was a problem in that the energy density is not secured (less than 750 Wh/L).

Since the lithium secondary battery using the negative electrode composition according to the present specification is intended to simultaneously satisfy high energy density and excellent service life characteristics, it was determined based on the criteria that the lithium secondary battery may be used as the lithium secondary battery according to the present invention only when it simultaneously satisfies an energy density of about 750 Wh/L or more and a capacity retention rate of about 79% or more at 300 cycles.

As can be seen from Table 1 above, in the case of Examples 1 to 4 using the negative electrode composition according to the present specification, the energy density was 750 Wh/L or more and the capacity retention rate at 300 cycles was simultaneously 79% or more, so that the lithium secondary batteries of Examples 1 to 4 could be used as the lithium secondary batteries having high energy density and excellent service life characteristics according to the present invention. This corresponds to the result of using a negative electrode active material in which based on 100 parts by weight of the solid content of the negative electrode composition, the negative electrode active material, a negative electrode conductive material, and particularly a linear conductive material were included in an amount of 70 parts by weight or more, 0.3 parts by weight or more, and 0.3 parts by weight or more and 3 parts by weight or less, respectively, the negative electrode aqueous binder was included in an amount of 9 parts by weight or more, such that each content was optimized, and simultaneously, Si nanograins had an average particle diameter (D50) of 0.1 nm or more and 5 nm or less as silicon oxide.

However, in the case of Example 3, the energy density and cycle performance were similar to those of Example 1 as the content of SWCNTs was increased to about 3-fold that of Example 1, but there was no significant improvement in performance due to the high content of SWCNTs, and Example 3 was rather disadvantageous in terms of costs.

Furthermore, in the case of Example 4, carbon black (particulate conductive material) was used as the second conductive material instead of the planar conductive material (SFG-6L) in Example 2, and no significant difference was observed in energy density and cycle performance compared to Example 2, but in a preliminary evaluation (negative electrode slurry production and gas generation analysis), it could be confirmed that the application of the particulate conductive material caused changes in the physical properties of the negative electrode slurry and gas problems at high temperatures.

Since a negative electrode active material including silicon oxide was not used in the lithium secondary battery of Comparative Example 1 using graphite as the negative electrode active material, there was no deterioration in the cycle performance of the electrode due to volume expansion, but the energy density was significantly reduced, so that the lithium secondary battery of Comparative Example 1 could not be used as a lithium secondary battery having high energy density and excellent service life characteristics according to the present invention.

The lithium secondary battery of Comparative Example 2, which included half the content of the negative electrode aqueous binder as a small amount compared to the negative electrode composition of Example 1, had a relatively high content of negative electrode active material, and thus, satisfied an energy density of 750 Wh/L or more, but since the content of the negative electrode aqueous binder was reduced, it became difficult to suppress the distortion of the electrode due to the change in the volume of the silicon oxide active material throughout the cycles, and the capacity retention rate was only in the early 70% range, so the lithium secondary battery of Comparative Example 2 could not be used as a lithium secondary battery having excellent performance according to the present invention.

The lithium secondary battery of Comparative Example 3, which included half the content of the negative electrode aqueous binder as a small amount compared to the negative electrode composition of Example 1, satisfied the energy density of 750 Wh/L or more as in Comparative Example 2, but although the negative electrode linear conductive material was included in an amount of two times or more than the amount in Example 1, the capacity retention rate was less than 79%, so that the lithium secondary battery of Comparative Example 3 could not be used as a lithium secondary battery having excellent performance according to the present invention. Through this, it could be confirmed that without an appropriate composition combination of the negative electrode active material and the negative electrode aqueous binder according to the present invention, it is difficult to maintain cycle characteristics during repeated charging and discharging of the battery even though a large amount of only the negative electrode linear conductive material is included.

Although the lithium secondary battery of Comparative Example 4, in which silicon oxide with remarkably small Si nanograins was used as the negative electrode active material, satisfied a capacity retention rate of 79% or more by appropriately combining the negative electrode composition according to the present invention, the size of the Si nanograins was so small that the energy density was significantly lower than that of Example 1, and therefore, the lithium secondary battery of Comparative Example 4 could not be used as a lithium secondary battery with excellent performance according to the present invention.

The lithium secondary battery of Comparative Example 5, in which silicon oxide having Si nanograins larger than the size range of Si nanograins according to the present specification was used as the negative electrode active material, was excellent in terms of energy density, but it could be confirmed that cracks were formed in the negative electrode active material after repeated charging and discharging, Li ions were prevented from diffusing into the nanograins and the degradation of the battery were accelerated due to reaction non-uniformity, resulting in a significant deterioration in capacity retention rate.

In the case of Comparative Example 6, it could be confirmed that by reducing the content of SWCNTs to half the level of Example 1, a rapid degradation in capacity occurred from the initial stage of cycling. Specifically, as a result of measuring the initial cycle capacity, the initial cycle capacity of Example 1 was 88.2 mAh, the initial cycle capacity of Example 2 was 89.0 mAh, but the initial cycle capacity of Comparative Example 6 was 86.8 mAh, which was remarkably low. For this reason, it could be confirmed that the capacity retention rates in Table 1 above were also significantly low. In this case, the initial cycle capacity was measured by charging (4.2 V, current 5% cut) under CC-CV conditions at a rate of 0.33 C and discharging (2.5 V) under CC conditions at a rate of 0.33 C.

In the case of Comparative Example 7, carbon black was used as the conductive material instead of the linear conductive material (SWCNTs) in Example 1, and since carbon black has low conductivity and specific surface area, it was not possible to form a conductive path (pass) in the negative electrode active material layer, so that it could be confirmed that as significant capacity degradation occurred, the capacity retention rate was significantly lower than that of Example 1.

In the case of Comparative Example 8, carbon black was used as the conductive material instead of the linear conductive material (SWCNTs) in Example 2, it was not possible to form a conductive path (pass) in the negative electrode active material layer, so that it could be confirmed that as significant capacity degradation occurred, the capacity retention rate was significantly low.

## Claims

1. A negative electrode composition comprising: a negative electrode active material comprising a silicon oxide; a negative electrode conductive material; and a negative electrode aqueous binder,
wherein based on 100 parts by weight of a solid content of the negative electrode composition, the negative electrode active material is included in an amount of 70 parts by weight or more, the negative electrode conductive material is included in an amount of 0.3 parts by weight or more, and the negative electrode aqueous binder is included in an amount of 9 parts by weight or more,
the negative electrode conductive material includes a linear conductive material in an amount of 0.3 parts by weight or more and 3 parts by weight or less based on 100 parts by weight of the solid content of the negative electrode composition,
the silicon oxide includes Si nanograins, and
the Si nanograins have an average particle diameter (D50) of 0.1 nm or more and 5 nm or less.

2. The negative electrode composition of claim 1, wherein the negative electrode aqueous binder is a polyacrylamide-based binder.

3. The negative electrode composition of claim 1, wherein the negative electrode composition comprises the negative electrode active material, the negative electrode conductive material, and the negative electrode aqueous binder in an amount of 70 parts by weight or more and 90 parts by weight or less, 0.3 parts by weight or more and 11 parts by weight or less, and 9 parts by weight or more and 20 parts by weight or less, respectively, based on 100 parts by weight of a solid content of the negative electrode composition.

4. The negative electrode composition of claim 1, wherein the silicon oxide comprises SiOx (0<x<2).

5. The negative electrode composition of claim 1, wherein the silicon oxide comprises amorphous SiOx (0<x<2), and
the Si nanograins are dispersed in the amorphous silicon oxide.

6. The negative electrode composition of claim 1, wherein the negative electrode active material has a D50 of 5 µm or more and 10 µm or less.

7. A negative electrode for a lithium secondary battery, comprising a negative electrode active material layer comprising the negative electrode composition according to any one of claims 1 to 6 or a cured product thereof on at least one surface of a negative electrode current collector layer.

8. A lithium secondary battery comprising:
a positive electrode;
the negative electrode for a lithium secondary battery according to claim 7;
a separator provided between the positive electrode and the negative electrode; and
an electrolyte.

9. A battery module comprising the lithium secondary battery according to claim 8**.**

10. A battery pack comprising the lithium secondary battery according to claim 8**.**

11. A battery pack comprising the battery module according to claim 9**.**
